# EUROPÄISCHE PATENTSCHRIFT

(11) **EP 2 926 128 B1**
(45) Veröffentlichungstag und Bekanntmachung des Hinweises auf die Patenterteilung: **15.04.2020**
(21) Anmeldenummer: 13807948.8
(22) Anmeldetag: 27.11.2013
(51) Int. Cl.: G01N 31/22, G01N 21/64, G01N 21/78, G01N 21/77

(54) **CHEMISCH STABILER SENSOR**
CHEMICALLY-STABLE SENSOR
CAPTEUR STABLE AUX PRODUITS CHIMIQUES

(30) Priorität: 30.11.2012 DE 102012111686
(43) Veröffentlichungstag der Anmeldung: 07.10.2015
(73) Patentinhaber: Hamilton Bonaduz AG, 7402 Bonaduz (CH)
(72) Erfinder: SCHOENFUSS, Dirk, CH-7015 Tamins (CH); ORTEGA SCHULTE, Claudius Michael, CH-7013 Domat/Ems (CH)
(74) Vertreter: Baumann, Rüdiger Walter
(86) Internationale Anmeldenummer: PCT/EP2013/074795
(87) Internationale Veröffentlichungsnummer: WO 2014/083020

(56) Entgegenhaltungen:
- EP-A2- 0 231 086
- DE-A1- 3 900 191
- DE-A1-102004 033 303
- US-A- 4 526 752
- US-A- 5 143 066
- US-A1- 2010 277 740
- OPITZ N ET AL: "Single molecule FCS-based oxygen sensor (O2-FCSensor): a new intrinsically calibrated oxygen sensor utilizing fluorescence correlation spectroscopy (FCS) with single fluorescent molecule detection sensitivity", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, CH, Bd. 96, Nr. 1-2, 15. November 2003 (2003-11-15), Seiten 460-467, XP004473769, ISSN: 0925-4005, DOI: 10.1016/S0925-4005(03)00601-4

## Beschreibung

### Chemisch stabiler Sensor

Die Erfindung betrifft eine sensorische Einheit mit mindestens einem Sensorelement, dessen Matrix und Sensorverbindungen (Indikatoren) vor zerstörenden oder inaktivierenden Einflüssen wie z.B. hoch reaktiven Verbindungen durch mindestens ein medienseitig angeordnetes Protektorelement geschützt sind. Die Erfindung betrifft weiterhin einen Sensor umfassend eine solche sensorische Einheit sowie die Verwendung der sensorischen Einheit und des Sensors zur Bestimmung eines Analyten in einer für das Sensorelement aggressiven Umgebung.

Allgemein bekannt sind Sensoraufbauten, deren Messprinzip darauf basiert, dass die im Sensor bzw. dessen sensorischen Element angeordneten sensorisch aktiven Verbindungen (Indikatoren) durch Zufuhr von Anregungsenergie in einen angeregten Energiezustand überführt werden. Unter Energieabgabe, z.B. in Form von Licht einer bestimmten Wellenlänge, gehen die Indikatoren in ein niedrigeres Energieniveau über.

Die Bestimmung eines Analyten in einer Probe erfolgt in der Regel durch Messung der von den Indikatoren emittierten Energie, die bei einem Kontakt mit einem Analyten für einen Nachweis hinreichend verändert ist.

Ausgehend von der Anregungs- und Emissionsenergieform können verschiedene Sensortypen unterschieden werden. Die Anregung der Indikatoren optischer Sensoren kann z.B. durch Zufuhr von Licht, chemischer oder elektrischer Energie erfolgen, wobei die Emission jeweils in Form von Licht einer definierten Wellenlänge erfolgt. Bei rein optischen Sensoren erfolgen Anregung und Emission der Indikatoren jeweils in Form von Licht einer bestimmten Anregungs (v1)- und Emissions (v2)-wellenlänge. Optische Sensoren werden z.B. für die Bestimmung von Sauerstoff, Halogenid- und Schwermetallionen, Kohlendioxid (CO₂) und des pH-Wertes eingesetzt. Das Sensorprinzip beruht hierbei auf der Eigenschaft der Indikatoren, ihre optischen Eigenschaften bei Kontakt mit dem zu bestimmenden Analyten zu verändern. Der Nachweis des Analyten kann so z.B. durch Messung der Veränderung der Wellenlänge, der Intensität von emittiertem Licht bzw. der Lumineszenzlöschung, der Veränderung der Lumineszenzabklingzeit bzw. Relaxationszeit von angeregten Zuständen der Indikatormoleküle, der Phasenverschiebung zwischen moduliertem anregenden und emittiertem Licht und/oder der Absorption von Lichtwellen erfolgen.

Das sensorische Element bekannter optischer Sensoren enthält wenigstens ein Sensorelement in oder auf dem die Indikatoren angeordnet sind, wobei die Indikatoren zumeist an der dem zu untersuchenden Medium zugewandten Oberfläche des Sensorelements immobilisiert bzw. inkorporiert sind. Das Matrixmaterial des Sensorelements besteht z.B. aus Polymerverbindungen, welche mit den Indikatoren dotiert sein können.

Sensorelemente sind zumeist als Membranen ausgestaltet. Weiterhin enthalten optische Sensoren des Standes der Technik in der Regel ein Trägerelement, welches als Substrat für das Sensorelement dient und transparent für das Anregungs- und/oder Emissionslicht der Indikatoren ausgebildet sein kann. Um eine hohe Messempfindlichkeit zu erreichen, kommen als Materialien für das Trägerelement solche mit einer hohen Lichtdurchlässigkeit wie klar durchsichtige Kunststoffe, klares Glas oder Glasfasern zum Einsatz. Weiterhin enthalten optische Sensoren in der Regel eine Messtechnik, die es erlaubt, die oben beschriebenen optischen Veränderungen der Indikatoren durch die Wechselwirkung mit den zu erfassenden Analyten optisch zu erfassen. In der Regel ist es zur Messung notwendig, Licht durch das Trägerelement zu den Indikatormolekülen zu senden und von diesen wiederum zu empfangen.

Zur optischen Messung von gelöstem Sauerstoff werden gegenwärtig Sensoren eingesetzt, die Lumineszenzindikatoren enthalten, deren durch Lichteinstrahlung einer bestimmten Wellenlänge v1 angeregte Lumineszenz mit der Wellenlänge v2 in Anwesenheit von Sauerstoff dynamisch gelöscht wird, wobei der angeregte Zustand des Lumineszenzindikators durch Sauerstoff strahlungslos deaktiviert wird.

Für eine zuverlässige Bestimmung eines Analyten wie z.B. molekularer Sauerstoff in komplexen Medien sind optische Sensoren weit verbreitet, da die hier angewandten Messmethoden vergleichsweise einfach sind und einen geringen apparativen Aufwand erfordern. Herkömmliche optische Sensoren haben aber den Nachteil, dass deren Sensorelemente keinen ausreichenden bzw. dauerhaften Schutz der hierin befindlichen Indikatoren vor zerstörenden Einflüssen, insbesondere reaktiven Verbindungen, aus der zu analysierenden Umgebung oder gegenüber hohen Temperaturen bieten. Die Betriebslebensdauer bekannter Sensorelemente ist daher insbesondere dann sehr begrenzt, wenn die einzelnen Sensorbestandteile, insbesondere die Indikatoren Bedingungen ausgesetzt werden, unter denen sie dauerhaft bzw. irreversibel geschädigt oder inaktiviert werden.

Bei verschiedenen Anwendungen enthält das zu analysierende Medium beispielsweise Verbindungen, die die Indikatoren durch eine chemische Reaktion zerstören können, sofern diese nicht ausreichend geschützt sind. So besteht etwa im Stand der Technik das Problem, dass die für eine Bestimmung von molekularem Sauerstoff derzeit zur Verfügung stehenden optischen Sensorelemente nicht oder nur mit sehr begrenzter Lebensdauer eingesetzt werden können, wenn das zu analysierende Medium wie z.B. Abwasser oder Wasser von Schwimmbädern, starke Oxidationsmittel wie Ozon, Superoxid, Hydroxylradikale oder zur Desinfektion eingesetzte Chlor- oder Peroxidverbindungen aufweist, deren Diffusion zu den Indikatoren im Sensorelement nicht verhindert werden kann und ein Kontakt zu einer oxidativen Inaktivierung der Indikatoren führt. Durch den fehlenden bzw. mangelhaften Schutz der Indikatoren sind herkömmliche Sensorelemente unter diesen Bedingungen nicht oder nur sehr eingeschränkt geeignet.

Optische Sensoren werden weiterhin in Bereichen eingesetzt, in denen Analyseverfahren unter Sterilbedingungen durchgeführt werden müssen. Solche Bereiche betreffen insbesondere die Medizin, Lebensmittelindustrie und Biotechnologie, in denen derzeit vor allem Einwegsysteme zum Einsatz kommen. Eine besondere Herausforderung besteht darin, sterilisierbare, insbesondere hitzesterilisierbare (optische) sensorische Einheiten bzw. (optische) Sensoren bereitzustellen, denn vor allem hitzesterilisierbare, z.B. dampfsterilisierbare (optische) Sensoren hätten gegenüber Einwegsystemen aufgrund ihrer mehrfachen Einsetzbarkeit im sterilen Umfeld ökonomische und ökologische Vorteile. Die derzeit aus dem Stand der Technik bekannten optischen Sensoren können jedoch nicht oder nur stark eingeschränkt den Bedingungen einer Hitzesterilisation ausgesetzt werden, da deren Aufbau und hierbei insbesondere die Konnektivität der einzelnen Bestandteile unter solchen Bedingungen Schaden nehmen würde, infolge dessen empfindliche Elemente des Sensors einer sie schädigenden Umgebung ausgesetzt würden und dadurch die korrekte Funktion des Sensors nicht mehr gegeben wäre.

An hitzesterilisierbare Sensoren werden besondere Anforderungen gestellt. So muss insbesondere das Sensorelement, umfassend Indikatoren und eine (polymere) Matrix zu deren Immobilisierung, derart beschaffen sein, dass die Permeabilität für den Analyten und die Transparenz sowohl für das Anregungs- als auch für das Lumineszenzlicht

auch nach einer Wärmezufuhr während der Sterilisation (z.B. Autoklaviervorgang) ausreichend erhalten bleibt. Entscheidend hierfür ist die thermische Beständigkeit der verwendeten Materialien. Daneben ist für die Bereitstellung temperaturstabiler Sensoren deren Aufbau, insbesondere die Anordnung und Verbindung der einzelnen Sensorelemente im Sensor entscheidend. So nützt es nichts, dass die Matrix des Sensorelements aus einem hitzestabilen Polymer ausgewählt ist, wenn infolge der Wärmezufuhr während der Sterilisation beispielsweise mechanische Schäden am Sensor eingetreten sind, die dessen weitere bestimmungsgemäße Verwendung verbieten.

Bei den derzeit in der Prozessmesstechnik verwendeten optischen Sensoren wurde festgestellt, dass die darin enthaltenen Indikatoren insbesondere nach thermischen Belastungen, welche im Laufe von Reinigungs- und Sterilisationsvorgängen auftreten können, z.B. beim Autoklavieren, bei CIP(Clean In Place)- und SIP (Sterilize in Place)-Behandlungen, nicht mehr ausreichend vor chemischen Angriffen geschützt sind. Schäden an den Indikator-tragenden Elementen treten vor allem dann auf, wenn bestimmte Substanzen im flüssigen Prozess- und/oder Reinigungsmedium vorhanden sind, welche bei erneuter Anwendung des einmal hitzesterilisierten Sensors in dessen polymere Indikatoren-tragende Sensorelementmembran eindringen können. Dies ist

einerseits auf die für die Sensorelemente verwendeten Matrixmembranpolymere, andererseits auf den Aufbau bzw. die Konstruktion des Sensors zurückzuführen. Letztere kann aufgrund der Wärmeeinwirkung während des Reinigungs- bzw. Sterilisationsvorgangs z.B. beschädigt sein, was in der Folge den Durchtritt aggressiver Substanzen zu dem Sensorelement bewirkt.

Es besteht daher ein Bedarf an Sensoren bzw. sensorischen Einheiten, insbesondere optischen Sensoren bzw. sensorischen Einheiten für den Lumineszenznachweis von Analyten in komplexen Medien, dessen bzw. deren Sensorbestandteile, insbesondere deren Lumineszenzindikatoren wirksam vor zerstörenden/inaktivierenden Einflüssen wie reaktive Chemikalien geschützt sind. Derartige Sensoren bzw. sensorische Einheiten sollen bevorzugt sterilisierbar, insbesondere hitzesterilisierbar sein.

Optische Sensoren, deren Sensorelementmatrix aus temperaturstabilen Polymeren besteht, sind z.B. aus WO2009016236A1 bekannt. Als Polymere werden solche mit einer nicht-aromatischen Hauptkette, d.h. cyclische Olefin-Polymere oder -Copolymere wie Ethylen-Norbornen Copolymer, Poly(n-methylmetacrylimid) oder Mischungen davon genannt. Nachteilig an dieser Lösung ist, dass die aufgrund der für optische Sensoren geltenden Messprinzipien ohnehin eingeschränkte Zahl von Matrix-Polymeren hier weiter einschränkt wird. So ist u.a. die Lumineszenzantwort eines Lumineszenzindikators stark von der verwendeten Polymermatrix abhängig. Die bisher verwendete Elektronik und Firmware bekannter Sensoren müsste auf neue, diesen Polymeren entsprechende Parameter angepasst werden.

Ein ähnlicher Lösungsvorschlag zur Verbesserung der chemischen Stabilität der Sensorelementmembran für optische Sensoren ist in EP 1199556B1 offenbart. Hier wird als Matrixpolymer ein Fluorpolymer offenbart. Wie in diesem Dokument ausführlich erläutert, sind in einer Fluorpolymer-enthaltenden Matrix Metallkomplexe nur bestimmter Übergangsmetalle mit speziellen, mindestens teilfluorierten Liganden als Lumineszenzindikatoren einsetzbar, was das Anwendungsspektrum der Sensoren stark einschränkt. Beispielsweise können kommerziell als Sauerstofflumineszenzindikatoren erhältliche und häufig eingesetzte Verbindungen wie z.B. Pt-Porphyrinkomplexe in einer derartigen Matrix nicht eingesetzt werden.

Aus CH 677151 und EP 0478720B1 ist bekannt, dass Schichten, Folien oder Membranen aus Fluorpolymeren, insbesondere PTFE verwendet werden können, um die chemische Stabilität einer nachgelagerten Schicht oder Membran eines elektrochemischen bzw. amperometrischen Sensors zu erhöhen.

DE 39 00 191 A1, DE 10 2004 033303 A1 und US 5 143 066 A offenbaren ähnliche sensorische Einheiten mit einem Gehäuse und darin angeordneten Sensorelementen mit Indikatoren und Trägerelementen.

Optische Sensoren, insbesondere optische Sensoren für die Sauerstoffanalyse, deren Indikator-tragende Sensorelemente auch nach einer Sterilisation wirksam gegen Angriffe reaktiver Verbindungen geschützt sind und so eine dauerhafte Bestimmung des Analyten mittels Lumineszenzmessung in einer für die Indikatoren aggressiven (chemischen) Umgebung ermöglichen, sind jedoch aus dem bisherigen Stand der Technik weder bekannt noch aus diesem herleitbar.

Aufgabe der Erfindung ist es, eine sensorische Einheit, insbesondere eine sensorische Einheit für den Einsatz in optischen Sensoren bereitzustellen, die für einen Mehrfacheinsatz zur Bestimmung eines Analyten in einer chemisch aggressiven Umgebung geeignet ist bzw. sich gegenüber bekannten sensorischen Einheiten durch eine verlängerte Betriebslebensdauer auszeichnet. Insbesondere war es Aufgabe der Erfindung, eine sensorische Einheit bereitzustellen, dessen Sensorelement selbst und insbesondere die hierin bzw. hierauf angeordneten Indikatoren vor einem direkten Kontakt mit zerstörenden und/oder deaktivierenden Substanzen auch nach einer Sterilisation der sensorischen Einheit, insbesondere nach einer Hitzesterilisation geschützt sind, so dass deren sensorische Eigenschaften, insbesondere Selektivität, Messbereich, Messgenauigkeit und Ansprechzeit nicht oder nur unwesentlich und für die Anwendung nicht nachteilig beeinflusst werden.

Zur Lösung dieser Aufgabe stellt die vorliegende Erfindung eine sensorische Einheit (1) gemäß Anspruch 1 bereit, umfassend a) ein Gehäuse (2) mit einer ersten Seite bzw. Gehäuseöffnung (2A), welche zu einem zu analysierenden Medium (M) hin ausrichtbar ist und einer zweiten

Seite bzw. Gehäuseöffnung (2B), b) wenigstens ein im Gehäuse (2) angeordnetes Sensorelement (3) umfassend Indikatoren und optional Indikatorprotektoren, wobei das Sensorelement (3) eine erste, der ersten Gehäuseöffnung (2A) und/oder dem Medium (M) zugewandte Seite (3A) und eine zweite, der ersten Gehäuseöffnung (2A) gegenüberliegende und/oder dem Medium abgewandte Seite (3B) aufweist, c) wenigstens ein Protektorelement (4).

Erfindungsgemäß ist das Protektorelement (4) im Bereich der ersten Gehäuseöffnung (2A) zwischen dem mindestens einen Sensorelement (3) und dem, die sensorische Einheit (1), insbesondere im Bereich der Gehäuseöffnung (2A) umgebenden Medium (M) derart angeordnet, dass das Sensorelement (3) und insbesondere dessen Indikatoren-tragender Bereich oder Abschnitt das Medium (M) nicht unmittelbar kontaktieren kann.

Das Gehäuse (2) der sensorischen Einheit (1) besteht aus einem für die jeweilige Anwendung geeigneten Material. Für zahlreiche Anwendungen geeignet sind Gehäuse aus einem Metall oder einer Metalllegierung. Bevorzugt im medizinischen, lebensmittelchemischen und biotechnologischen Bereich sind z.B. Edelstahllegierungen, weshalb das Gehäuse (2) der sensorischen Einheit (1) der Erfindung bevorzugt eine Edelstahllegierung aufweist. Weiterhin sieht eine Ausführungsform ein Gehäuse umfassend Kunststoff, Keramik und/oder Glas optional in Verbindung mit Metall vor.

Im Bereich der zweiten Gehäuseöffnung (2B) kann an dem Gehäuse (2) mindestens ein Mittel zur lösbar festen Verbindung der sensorischen Einheit (1) mit einem Sensorschaft oder Sensorgehäuse (8) angeordnet sein. Das oder die Befestigungsmittel ist bzw. sind geeigneter Weise an dem Gehäuse (2) an der Außenseite und/oder im Gehäuseinneren angeordnet und ausgewählt aus einem Gewinde und/oder Steck- bzw. Rastmittel.

Weist der Sensorschaft oder das Sensorgehäuse entsprechende Gegenmittel auf, kann die sensorische Einheit (1) mit dem Sensorschaft oder Sensorgehäuse verschraubt, zusammengesteckt oder ineinander verrastet, bspw. durch einen Bajonettverschluss oder dergleichen. Die Verbindung zwischen sensorischer Einheit (1) und Sensorschaft bzw. Sensorgehäuse (8) ist bevorzugt eine mediendichte Verbindung. Hierzu besteht die Möglichkeit, Dichtmittel, bspw. O-Ringe oder dergleichen in die Verbindung einzubringen. Alternativ sind die sensorische Einheit (1) und der Sensorschaft bzw. das Sensorgehäuse in einem gemeinsamen Gehäuse integriert und/oder die sensorische Einheit (1) ist integraler Bestandteil und funktioneller Abschnitt eines Sensors.

Weiterhin kann die sensorische Einheit (1) unlösbar fest mit einem Sensorschaft oder Sensorgehäuse (8) verbunden, z.B. verklebt, verschweisst oder verlötet sein. Hinsichtlich der räumlichen Ausgestaltung weist die erfindungsgemäße sensorische Einheit (1) bevorzugt eine kappen-, rohr- oder hülsenartige Form auf. Besonders bevorzugt weist die sensorische Einheit (1) eine kappenartige Form auf (Sensorkappe).

Die erfindungsgemässe sensorische Einheit (1) enthält neben den vorstehend genannten Bestandteilen (2)-(4) weiterhin ein Trägerelement (5), auf dem oder an dem das Sensorelement (3) medienseitig angeordnet bzw. auf- oder vorgelagert ist, d.h. in dem die zweite Seite (3B) des Sensorelements (3) das Trägerelement (5) kontaktiert. Sensorelement (3) und Trägerelement (5) sind bevorzugt derart angeordnet, dass die zweite Seite (3B) des Sensorelements das Trägerelement (5) an dessen Medium-zugewandter Seite vollflächig kontaktiert, d.h. die gesamte Fläche der Seite (3B) liegt dem Trägerelement (5) direkt auf. Bevorzugt ist der Bereich zwischen Sensorelement (3) und Trägerelement (5) hohlraumfrei. Alternativ sieht eine Ausführungsform vor, dass das Sensorelement (3) mit dem Trägerelement (5) eine Einheit bildet, die verschiedene funktionelle Abschnitte aufweisen kann.

Bevorzugt enthält die erfindungsgemäße sensorische Einheit (1) als Sensorelement (3) ein optisches Sensorelement umfassend Indikatoren ausgewählt aus gleich- oder verschiedenartigen Lumineszenz-aktiven Mitteln (Lumineszenzindikatoren). Weiterhin ist vorgesehen, dass das Sensorelement (3) und das Trägerelement (5) oder die aus Sensorelement (3) und Trägerelement (5) gebildete Einheit für Emissionslicht und/oder Anregungslicht der Lumineszenzindikatoren transparent ist. Das Trägerelement (5) besteht hierbei bevorzugt aus klarem Glas, Glasfasern oder klarem Kunststoff oder umfasst diese Materialien. Bilden Trägerelement (5) und Sensorelement (3) eine Einheit, so besteht deren Matrix bevorzugt aus klarem Glas, Glasfasern oder klarem Kunststoff oder umfasst diese Materialien. Geeignete Materialien mit Licht-transparenten Eigenschaften sind dem Fachmann bekannt. Über das (transparente) Trägerelement (5) ist das Sensorelement (3) vorteilhaft mit einem optischen System gekoppelt, das je nach beabsichtigter Verwendung teilweise oder vollständig in der sensorischen Einheit (1) und/oder in einem Sensorgehäuse (8), mit dem die sensorische Einheit verbunden werden kann, angeordnet sein kann. Das optische System kann ein dem Fachmann bekanntes System umfassend eine Detektions-/Messeinheit zur Detektion/Messung der Emission, z.B. ein Photodetektor/eine Photodiode, eine Auswerteeinheit und Mittel zur Anregung der Lumineszenz der Indikatoren - bei Verwendung von Photolumineszenzindikatoren z.B. eine Lichtquelle, wie z.B. eine Leuchtdiode - sein.

Der Begriff "optisches Sensorelement" im Zusammenhang mit der vorliegenden Erfindung umfasst Sensorelemente, die Lumineszenzindikatoren enthalten. Als Lumineszenzindikatoren werden Moleküle, Verbindungen bzw. Substanzen verstanden, die die Eigenschaft aufweisen, nach Anregung durch eine bestimmte Energiemenge, Licht einer definierten Wellenlänge zu emittieren (lumineszieren). Zudem haben Lumineszenzindikatoren die Eigenschaft, dass ihre Lumineszenz in Gegenwart einer bestimmten Verbindung/Substanz oder Gruppe von Verbindungen/Substanzen hinsichtlich Intensität, Dauer und/oder Wellenlänge charakteristisch verändert ist. Substanzen, welche die Lumineszenz der für sie selektiven Indikatoren in charakteristischer Weise verändern, können mittels Messung der Lumineszenzänderung(en) als Analyt je nach Sensoraufbau und Messmethode quantitativ und/oder qualitativ bestimmt werden. Grundsätzlich können alle dem Fachmann bekannten Lumineszenzindikatoren im erfindungsgemäßen Sensorelement eingesetzt werden. Geeignete Lumineszenzindikatoren sind z.B. Chemolumineszenz-, Elektro(chemo)lumineszenz-, Thermolumineszenz-, Radiolumineszenz-, Sonolumineszenz-, Photolumineszenzindikatoren und Kombinationen davon. Für den Einsatz in der erfindungsgemäßen sensorischen Einheit (1) sind insbesondere Photolumineszenzindikatoren, d.h. fluoreszierende und/oder phosphoreszierende Indikatoren vorgesehen. Weiterhin ist vorgesehen, Lumineszenzindikatoren einzusetzen, deren Lumineszenzemission bei Kontakt mit mindestens einem Analyten selektiv gelöscht wird. In einer Ausführungsform umfasst das Sensorelement (3) Lumineszenzindikatoren und insbesondere Photolumineszenzindikatoren, deren Lumineszenzemissionen bei Kontakt mit Sauerstoff und bevorzugt molekularem Sauerstoff selektiv gelöscht werden. Besonders bevorzugt sind Indikatoren, deren Lumineszenzemissionen in Anwesenheit von Sauerstoff dynamisch gelöscht werden, wobei der angeregte Zustand der Lumineszenzindikatoren bei Kontakt mit Sauerstoff strahlungslos deaktiviert wird. Für die Bestimmung von Sauerstoff besonders geeignete Lumineszenzindikatoren sind Ruthenium-, Rhenium-, Rhodium-, Iridium-Lanthanidkomplexe, metallierte Porphyrine (z.B. Platin- und/oder Palladiumporphyrine), unmetallierte Porphyrine oder Mischungen daraus, optional in Kombination mit fluorierten Farbstoffen und/oder Lichtschutzmitteln.

Das Sensorelement (3) ist bevorzugt als eine ein- oder mehrschichtige, z.B. zwei-, drei-, vier-, fünf- oder sechsschichtige Membran ausgestaltet, auf deren dem Medium zugewandten Seite (3A) die Indikatoren angeordnet, z.B. dotiert sind. Das Sensorelement enthält bevorzugt weiterhin Indikatorprotektoren. Bei einer mehrschichtigen Ausgestaltung der Sensorelementmembran (3) können die Indikatorprotektoren in einer Schicht angeordnet sein (Indikatorprotektoren-tragende Schicht) und die Indikatoren in einer anderen Schicht des Elements (3) angeordnet sein (Indikatoren-tragende Schicht). Bevorzugt ist die Indikatorprotektoren-tragende Schicht der Indikatoren-tragenden Schicht medienseitig vorgelagert. Im Falle einer membranartigen Ausgestaltung weist das Sensorelement (3) eine Dicke von 0,001 bis 1mm, bevorzugt von 0,005 bis 0,5mm, mehr bevorzugt von 0,01 bis 0,2mm auf.

Das Matrixmaterial des Sensorelements (3) umfasst oder besteht bevorzugt aus einem Polymer oder Polymergemisch, ausgewählt aus Polystyrol, Polyvinylchlorid, Polyalkylmethacrylat, insbesondere Polymethylmethacrylat, Polyisobutylmethacrylat und Poly-2-hydroxyethylmethacrylat, Poly-α-methylstyrol, Kieselgelen, Sol-Gelen, Hydrogelen, Polyurethanen, Polytetrahydrofuranen, Polytetrafluorethylen, Polyester, Polybutadien, Polyvinylbutyral, Polyethylacrylat, Ethylcellulose, Cellulosetriacetat, Cellulose-acetylbutyrat, Polysulfonen, Polysulfiden, Silikonen, fluorierten Silikonen und Kombinationen daraus, optional in Kombination mit Weichmachern. Indikatorprotektoren im Sinne der vorliegenden Erfindung sind Mittel, welche die Lumineszenzindikatoren vor deren Zerstörung/Inaktivierung durch äussere Einflüsse schützen. Der Schutz der Indikatoren wird bewirkt durch Inaktivierung, Neutralisation und/oder adsorptive Immobilisierung von Verbindungen und/oder durch Inaktivierung, Neutralisation/Isolation energiereicher Strahlung, welche auf die Indikatoren inaktivierend und/oder zerstörend, insbesondere oxidierend, wirken.

Als Indikatorprotektor(en) geeignet sind Reaktionspartner einer oder mehrerer Verbindungen/Substanzen, welche bei Kontakt mit den Indikatoren auf diese zerstörend/inaktivierend wirken. Die Reaktionspartner reagieren mit den zerstörend/inaktivierend wirkenden Verbindungen/Substanzen z.B. in einer chemischen Reaktion zu mindestens einem für die Indikatoren unschädlichen Produkt. Der Begriff "Indikatorprotektor(en)" ist in diesem Zusammenhang nicht auf Reaktionspartner beschränkt, die bei der Reaktion mit der Indikator-zerstörenden/inaktivierenden Verbindung/Substanz zu mindestens einer für den Indikator nicht oder weniger zerstörenden/inaktivierenden neuen Verbindung umgesetzt werden. Unter den Begriff "Indikatorprotektor(en)" sind auch Mittel mit katalytischer Wirkung (Katalysatoren) zu subsummieren, welche die Umsetzung der Indikator- zerstörenden/inaktivierenden Verbindung/Substanz zu mindestens einer für den Indikator nicht oder weniger zerstörenden/inaktivierenden neuen Verbindung katalysieren. In diesem Zusammenhang umfasst der Begriff "Katalysator" bzw. "Mittel zur katalytischen Umsetzung" neben einer rein katalytischen Wirkungsweise auch Verbindungen, die neben besagter katalytischer Wirkung auch eine einfache chemische Reaktionsfähigkeit im Sinne eines Reaktionspartners, welcher bei der Reaktion selbst umgesetzt wird, aufweisen.

Als Indikatorprotektor(en) weiterhin geeignet sind Adsorbentien einer oder mehrerer Verbindungen/Substanzen, welche bei Kontakt mit den Indikatoren auf diese zerstörend/inaktivierend wirken. Adsorbentien inhibieren die Diffusion der Indikatorzerstörenden/inaktivierenden Verbindung/Substanz in Richtung der Indikatoren ganz oder teilweise.

Als Indikatorprotektoren eignen sich insbesondere auch Kombinationen der vorstehend genannten Reaktionspartner, Katalysatoren und/oder Adsorbentien. Es ist auch möglich, dass als Indikatorprotektoren eingesetzte Mittel sowohl als Reaktionspartner, Katalysator und/oder Adsorbens wirken. Das Protektorelement (4) ist an dem Sensorelement (3) bzw. der Einheit aus Sensor und Trägerelement bevorzugt derart angeordnet, dass das Protektorelement (4) das Sensorelement (3) an dessen erster Seite (3A) unmittelbar bzw. direkt kontaktiert. Besonders bevorzugt wird die gesamte Fläche, zumindest aber die gesamte Indikatoren enthaltende Fläche der Seite (3A) des Sensorelements (3) von der Medium (M)-abgewandten Seite des Protektorelements (4) unmittelbar bzw. direkt kontaktiert. Insbesondere bevorzugt ist das Protektorelements (4) mit seiner dem Medium (M) abgewandten Seite der gesamten Fläche, zumindest der gesamten Indikatoren-tragenden Fläche der dem Medium (M) zugewandten Seite (3A) des Sensorelements (3) vor- bzw. aufgelagert. Bevorzugt ist der Bereich zwischen Sensorelement (3) und Protektorelement (4) hohlraumfrei.

In einer besonders bevorzugten Ausführungsform wird das Sensorelement (3) auf der Seite (3A) von dem Protektorelement (4) und auf der Seite (3B) von dem Trägerelement (5) (vollflächig) kontaktiert, wobei die jeweilige Anordnung der Elemente zueinander wie oben beschrieben ist. Das Protektorelement (4) umfasst bevorzugt ein oder mehrere Fluor-Polymere oder besteht aus diesen. Geeignete Fluorpolymere sind dem Fachmann bekannt. Besonders geeignet, da chemisch gegenüber vielen reaktiven Verbindungen inert, sind Polytetrafluorethylen-Polymere (PTFE). Das Protektorelement (4) ist bevorzugt als eine ein- oder mehrschichtige Membran (Protektorelementmembran) ausgestaltet. Besonders bevorzugt ist das Protektorelement (4) eine ein- oder mehrschichtige Protektorelementmembran umfassend oder bestehend aus PTFE.

Die Dicke des Protektorelements (4) in der erfindungsgemäßen sensorischen Einheit (1) beträgt 1 - 100 µm, bevorzugt 10-100 µm, insbesondere bevorzugt 20-50 µm. Das Protektorelement (4) muss eine hinreichend große Permeabilität für den oder die zu bestimmenden Analyten aufweisen. Schichtdicke und Material des Protektorelements sind entsprechend dem für die sensorische Einheit vorgesehenen Anwendungsbereich auszuwählen, wobei bei der Auswahl zu beachten ist, dass die Ansprechzeit des Sensors nicht nachteilig verändert ist.

Bei optischen Sensoren ist die Ansprechzeit anders als z.B. bei amperometrischen Sensoren nicht von der Ausbildung eines Diffusionsgradienten in der sensorischen Schicht, zu welchem der gemessene Strom proportional ist, sondern von der Einstellungsgeschwindigkeit des thermodynamischen Phasengleichgewichtes des Analyten, zwischen dem Medium (M) und der Indikatoren-tragenden Phase (3) abhängig.

Besonders bevorzugt ist daher die für den oder die zu bestimmenden Analyten spezifische Permeabilität des Protektorelements (4) sowohl im Betriebszustand sowie vor und nach einer Hitzesterilisation (z.B. Thermoautoklaviervorgang) größer oder zumindest gleich der entsprechenden Permeabilität des Sensorelements (3). Das Protektorelement (4) dient bevorzugt als Barriere für Nicht-Analyten, insbesondere für das Sensorelement (3) schädigende Verbindungen, d.h. das Protektorelement verhindert den direkten Kontakt solcher Verbindungen mit dem Sensorelement (3). Schädigende Verbindungen sind u.a. reaktive lyophile oder organophile Substanzen, welche in die Sensorelementmatrix eindringen und diese zerstören können. Schädigende Verbindungen sind weiterhin Substanzen wie zum Beispiel Chlor, Ozon, Hydroxylradikale, Peroxidradikale und/oder Superoxide, die z.B. durch oxidative und/oder radikalische Angriffe inaktivierend und/oder zerstörend auf die Indikatoren wirken.

Bevorzugt ist das Protektorelement (4) gaspermeabel. Besonders bevorzugt weist das Protektorelement (4) eine (selektive) Permeabilität für gasförmigen Sauerstoff, insbesondere molekularen Sauerstoff auf. Insbesondere weist das Protektorelement (4) eine Gaspermeabilität von mindestens 5 x 10-9 cm2 s-1 mmHg-1 bzw. 3.750-10-15 m4 s-1 N-1 für Sauerstoff auf.

Bevorzugt ist die Gaspermeabilität des Protektorelements (4) größer als die entsprechende Gaspermeabilität des Sensorelements (3).

In einer bevorzugten Ausführungsform ist das Protektorelement (4) gaspermeabel und impermeabel für nicht-gasförmige Verbindungen.

Als Problem bei der Entwicklung der sensorischen Einheit stellte sich heraus, dass sich Protektorelemente (4) in Form von Fluorpolymeren und insbesondere Fluorpolymermembranen wie PTFE-Membranen wie vorstehend beschrieben, nur schwer mit anderen Materialien verbinden lassen. Erste Versuche, das Protektorelement (4), insbesondere ein Protektorelement (4) in Form einer Fluorpolymermembran mit dem Gehäuse (2) und/oder dem Sensorelement (3) und/oder dem Trägerelement (5) durch Verkleben zu verbinden, schlugen fehl. Allenfalls war ein Verkleben dann möglich, wenn die Oberfläche der Fluorpolymermembran chemisch, z.B. durch Ätzen funktionalisiert wird. Dies ist jedoch prozesstechnisch mit großem Aufwand verbunden. Ausserdem können die Eigenschaften der Fluorpolymermembran hinsichtlich der Permeabilität für den bzw. die Analyten nachteilig verändert werden. Zudem wird eine weitere Barriere für den Analyten durch den Kleber selbst geschaffen.

Eine weitere Aufgabe der Erfindung war es daher, eine sensorische Einheit (1), wie oben beschrieben bereitzustellen, worin ein wie oben beschriebenes Protektorelement (4), z.B. in Form einer Fluorpolymermembran, mit dem Gehäuse (2) und/oder dem Sensorelement (3) und/oder dem Trägerelement (5) und/oder der Einheit aus Sensorelement (3) und Trägerelement (5) dauerhaft und optional thermostabil verbunden ist. Auf die Verwendung von Klebstoff zur Herstellung dieser Verbindung sollte verzichtet werden.

Insbesondere war es Aufgabe der Erfindung, eine sensorische Einheit (1), wie oben beschrieben bereitzustellen, deren Verbindungsstelle zwischen Protektorelement (4) und Gehäuse (2) und/oder Sensorelement (3) und/oder Trägerelement (5) und/oder der Einheit aus Sensorelement (3) und Trägerelement (5) gasdicht ist, wobei die Verbindung einfach, d.h. ohne einen größeren prozesstechnischen Aufwand wie z.B. ein vorheriges Funktionalisieren des Protektorelements (4) hergestellt werden soll.

Diese Aufgabe wurde durch Bereitstellung einer sensorischen Einheit (1) gemäß Anspruch 1 gelöst, wobei das Protektorelement (4) im Bereich der ersten Gehäuseöffnung (2A) mechanisch, d.h. ohne Verwendung von Klebstoff und ohne ein Verschweissen mit dem Gehäuse (2) und/oder dem Sensorelement (3) und/oder dem Trägerelement (5) und/oder der Einheit aus Sensorelement (3) und Trägerelement (5) fest oder lösbar fest verbunden ist, wobei die mechanische Verbindung in einer bevorzugten Ausführungsform an der Verbindungsstelle diffusionsdicht für Bestandteile des zu analysierenden Mediums (M), insbesondere bevorzugt gasdicht ist.

Eine bevorzugte Ausführungsform sieht vor, dass das mechanisch mit dem Gehäuse (2) und/oder dem Sensorelement (3) und/oder dem Trägerelement (5) und/oder der Einheit aus Sensorelement (3) und Trägerelement (5) verbundene Protektorelement (4) als Membran (Protektorelementmembran) wie oben beschrieben ausgestaltet ist.

"Mechanische Verbindung" im Zusammenhang mit der vorliegenden Erfindung bedeutet eine feste oder lösbar feste Verbindung, bei der das Protektorelement (4) an der Verbindungsstelle an das Gehäuse (2) und/oder das Sensorelement (3) und/oder das Trägerelement (5) und/oder die Einheit aus Sensorelement (3) und Trägerelement (5) angedrückt, bzw. die genannten Bestandteile an der Verbindungsstelle miteinander verpresst, verschraubt oder/und miteinander verrastet sind. Bevorzugt ist das Protektorelement (4) an der Verbindungsstelle an das Gehäuse (2) und/oder das Sensorelement (3) und/oder das Trägerelement (5) und/oder die Einheit aus Sensorelement (3) und Trägerelement (5) angedrückt.

Zur Gewährleistung einer mechanischen Verbindung sieht die Erfindung folgende Ausgestaltung vor:

Ein wie vorstehend beschriebenes Protektorelement (4), insbesondere eine Protektorelementmembran (4) ist an oder mit dem Gehäuse (2) an einer im Bereich der ersten Gehäuseöffnung (2A) angeordneten, zum Gehäuseinneren ausgerichteten, Abkantung (K) des Gehäuses (2) mechanisch befestigt, wobei ein Umgreifen oder Überdecken eines peripheren Bereiches der Protektorelementmembran (4) durch die Gehäuseabkantung (K) vorgesehen ist. Bei dieser Ausführungsform ist die Peripherie bzw. der Randbereich der Protektorelementmembran (4) bevorzugt in einem im Bereich der ersten Gehäuseöffnung (2A) angeordneten nutförmigen Element (N) angeordnet, wobei die Peripherie der Membran (4) insbesondere in ein solches Element (N) gedrückt oder gepresst ist. Der nutförmige Bereich (N) kann durch die Abkantung (K) einerseits und das Trägerelement (5) und/oder die Einheit aus Sensorelement (3) und Trägerelement (5) andererseits definiert sein. Als konstruktiv günstig hat sich eine Lösung herausgestellt, in der das nutförmige Element (N) durch die Gehäuseabkantung (K) und ein der Abkantung (K) zugeordnetes, im Gehäuseinneren angeordnetes Presselement (P), insbesondere einen Pressring definiert ist.

Das Presselement (P) kann in einer Ausführungsform eine Ausformung des Gehäuses (2) sein, d.h. das Presselement ist hier ein spezifisch geformter, bevorzugt in das Gehäuselumen tragender Abschnitt des Gehäuses (2). In einer anderen Ausführungsform ist das Presselement (P) ein separater Bestandteil der sensorischen Einheit (1) und fest oder lösbar fest mit dem Gehäuse (2) verbunden. Es ist bevorzugt auf dessen Innenseite und in das Gehäuselumen hineinragend angeordnet. Das Element (P) kann in einem solchen Fall aus dem gleichen Material wie das Gehäuse bestehen oder von diesem verschieden sein. Bevorzugt ist das Element (P) aus eine Metalllegierung, insbesondere Edelstahl gefertigt.

Besonders bevorzugt ist die Protektorelementmembran (4) derart mechanisch mit dem Gehäuse (2) und/oder dem Sensorelement (3) und/oder dem Trägerelement (5) und/oder der Einheit aus Sensorelement (3) und Trägerelement (5) verbunden, dass die Peripherie bzw. der Randbereich der Membran (4) die der ersten Gehäuseöffnung (2A) zugewandte Stirnfläche des Presselements (P), insbesondere Pressrings, wenigstens soweit bedeckt, dass eine durch den Innendurchmesser des Presselements (P), insbesondere Pressrings, definierte Fläche, vollständig von der Protektorelementmembran (4) überspannt ist.

Die mechanische Verbindung innerhalb des nutförmigen Bereich (N) wird durch mindestens ein darin einlegbares Dicht- und/oder Klemmelement, insbesondere einen O-Ring (O) bewirkt. Das Dicht- und/oder Klemmelement ist hinsichtlich Material und Dimension derart ausgewählt, dass es im eingelegten Zustand eine für eine mechanische Verbindung hinreichend hohe Presskraft auf das Protektorelement (4) ausübt, um es stabil mechanisch zu befestigen, bzw. mit dem Gehäuse (2) und/oder dem Sensorelement (3) und/oder dem Trägerelement (5) und/oder der Einheit aus Sensorelement (3) und Trägerelement (5) wie oben beschrieben zu verbinden.

Das Sensorelement (3), das Protektorelement (4) und optional das Trägerelement (5) sind in und mit dem Gehäuse (2) mittels eines gemeinsamen Presselements (P) miteinander verpresst, wobei ein Dichtung und/oder Klemmelement (O) die Abdichtung gegen das zu analysierende Medium gewährleistet und wobei die jeweiligen Elemente wie oben beschrieben sind.

Bevorzugt ist hierbei das Protektorelement (4) eine wie oben beschriebene Membran, insbesondere eine Fluorpolymermembran. Das Presselement (P) ist bevorzugt ein Pressring. Das Dicht- und/oder Klemmelement ist bevorzugt ein O-Ring.

Diese Ausführungsform kann weiterhin derart ausgestaltet sein, dass die medienberührenden Bestandteile der sensorischen Einheit (1) lediglich auf die Aussenfläche des Gehäuses (2), das Dicht- und/oder Klemmelement (O) und das Protektorelement (4) beschränkt sind. Dies wird z.B. erreicht, in dem der Durchmesser der Protektorelementmembran (4) gleich oder grösser als der Aussendurchmesser des verwendeten O-Ringes ist. Weiterhin ist es vorteilhaft, wenn der Durchmesser des Sensorelements (3), insbesondere der Durchmesser des Indikator-tragendes Bereichs des Sensorelements (3) bzw. der Einheit aus Sensorelement (3) und Trägerelement (5) nicht grösser als der Innendurchmesser des gepressten O-Ringes ist. So können Quetschungen und Stauchungen des Sensorelements (3), insbesondere bei dessen Ausgestaltung als Sensorelementmembran beim Verpressen vermieden werden.

Das Presselement (P) ist ein Pressring, in dessen Lumen das Trägerelement (5) oder die Einheit aus Sensorelement (3) und Trägerelement (5) integriert ist.

Eine weitere Ausgestaltung der erfindungsgemäßen sensorischen Einheit sieht vor, dass das Sensorelement (3) mit dem Trägerelement (5) und optional mit dem Pressring (P) eine Einheit bildet und bevorzugt das Gehäuse (2) und die Einheit aus Sensorelement (3) und Trägerelement (5) und optional Pressring (P) als einstückiger Körper ausgebildet sind. Ein solcher einstückiger Körper kann z.B. aus einem Kunststoffmaterial gebildet sein. Dieses Kunststoffmaterial ist günstiger Weise ausgewählt aus der Gruppe bestehend aus thermoplastischen Kunststoffen, insbesondere Polycarbonat, Polyvinylidenfluorid, Polyethylenterephthalat, Polypropylen, Polyvinylchlorid, Polystyrol, Acrylnitril-Butadien-Styrol, Polyamid, Polylactat, Polymethylmethacrylat, Polyethylen und Polyetheretherketon oder Mischungen daraus.

Bevorzugt ist das Kunststoffmaterial transparent für das Anregungs- und/oder Emissionslicht der Indikatoren.

Aufgabe der Erfindung war es zudem, eine sensorische Einheit bereitzustellen, die keinen oder nur einen möglichst kleinen Zwischenraum bzw. Hohlraum zwischen Sensorelement (3) und Protektorelement (4) aufweist, um die Ansprechzeit des Sensors gering zu halten, da letztere von der Einstellungsgeschwindigkeit des thermodynamischen Phasengleichgewichtes des Analyten, z.B. Sauerstoff, zwischen dem Medium (M) und dem Sensorelement (3) abhängt.

Vorteilhaft zur Vermeidung von Hohlräumen zwischen Sensorelement bzw. Sensorelementmembran (3) und Protektorelement bzw. Protektorelementmembran (4) ist es, dass die zur ersten Gehäuseöffnung (2A) zugewandte Seite des Trägerelements (5) oder der Einheit aus Sensorelement (3) und Trägerelement (5) konvex oder linsenartig geformt ist und das Trägerelement oder die Einheit aus Sensorelement (3) und Trägerelement (5) ein plan-konvex geformter Körper ist. Die zur Medienseite gerichtete linsenartige Ausformung des Trägerelements (5) oder der Einheit aus Sensorelement (3) und Trägerelement (5) bewirkt ein Spannen der Protektorelementmembran (4) beim Verpressen. Weiterer Vorteil hierbei ist, dass Gasblasen, die sich beim Eintauchen der sensorischen Einheit (1) in ein zu analysierendes flüssiges Medium (M) an diesem bilden können, nicht oder nur in geringerem Maße vor der Protektorelementmembran (4), d.h. an deren medienkontaktierender Seite hängen bleiben können, da sie durch die konvexe Ausformung selbst bei senkrechtem Eintauchen in das Medium (M) abgeleitet werden. Zudem ist hierbei vorteilhaft, dass durch die Linsenform das Lumineszenzlicht, welches von den Indikatoren des Sensorelements (3) emittiert wird, in einer Ebene auf der medienabgewandten Seite der sensorischen Einheit (1), insbesondere in der Ebene einer hier angeordneten (Foto-) Detektionseinheit gebündelt wird, während das Anregungslicht gestreut wird. Somit kann bei gleichem Anregungslicht eine Intensitätssteigerung erreicht werden bzw. es wird vergleichsweise weniger Anregungslicht benötigt, da im Vergleich zu einer planen Ausgestaltung mehr Lumineszenzlicht die Detektionseinheit erreicht. Mit weniger Anregungslicht auszukommen, verringert den Effekt des Photobleichens und führt ebenso zu einer Verlängerung der Betriebslebensdauer der sensorischen Einheit (1).

Ein weiterer Gegenstand der vorliegenden Erfindung ist ein Sensor (8) umfassend mindestens eine wie vorstehend beschriebene sensorische Einheit (1).

Ein weiterer Gegenstand der vorliegenden Erfindung ist eine Verwendung einer wie vorstehend beschriebenen sensorischen Einheit (1) oder eines Sensors (8), umfassend eine solche, zur quantitativen und/oder qualitativen Bestimmung wenigstens eines Analyten in einem Medium (M), insbesondere zum Nachweis von molekularem Sauerstoff in einem gasförmigen oder flüssigen Medium und/oder zur Bestimmung des molekularen Sauerstoffgehaltes eines gasförmigen oder flüssigen Mediums, wobei das Medium (M) Verbindungen enthalten kann, welche auf die Indikatoren inaktivierend und/oder zerstörend, insbesondere oxidierend wirken, wie zum Beispiel Chlor, Ozon, Hydroxylradikale, Peroxidradikale und/oder Superoxide.

Bereits das Protektorelement (4) bietet einen wirksamen Schutz der Indikatoren vor inaktivierenden und/oder zerstörenden Verbindungen auch nach einer Hitzesterilisation und insbesondere dann, wenn es wie vorstehend beschrieben angeordnet und mechanisch befestigt ist. Der Schutz der Indikatoren und damit die Betriebslebensdauer der erfindungsgemäßen sensorischen Einheit (1) wird zudem weiter erhöht, wenn das Sensorelement (3) weiterhin Indikatorprotektoren wie oben beschrieben enthält, welche die Indikatoren zusätzlich vor schädigender energiereicher Strahlung ("Photobleichung") schützen.

Ein weiterer Gegenstand der vorliegenden Erfindung ist ein Verfahren zur quantitativen und/oder qualitativen Bestimmung eines oder mehrerer Analyten, insbesondere molekularem Sauerstoff in einem Medium (M), umfassend das In-Kontaktbringen des Mediums (M) mit einer wie vorstehend beschriebenen sensorischen Einheit (1) oder einem Sensor (8), umfassend eine solche, wobei das In-Kontaktbringen an der ersten Gehäuseöffnung (2A) erfolgt.

Ein weiterer Gegenstand der vorliegenden Erfindung ist ein Kit, umfassend eine wie vorstehend beschriebene sensorische Einheit (1) oder einen Sensor (8), umfassend eine solche. Die erfindungsgemäße sensorische Einheit (1) zeichnet sich dadurch aus, dass ein Eindringen von unter anderem reaktiven lyophilen oder organophilen Substanzen in die (polymere) Matrix des Sensorelements (3) und damit eine relativ schnelle Zerstörung der Matrix selbst und/oder der Indikatoren durch mögliche oxidative und/oder radikalische Angriffe sowie ein Herauslösen der Indikatoren durch z. B. organische Lösungsmittel verhindert wird.

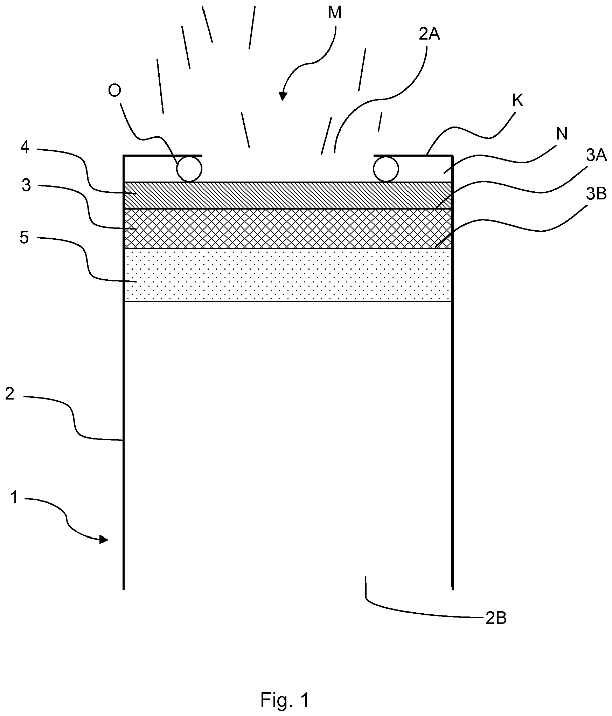

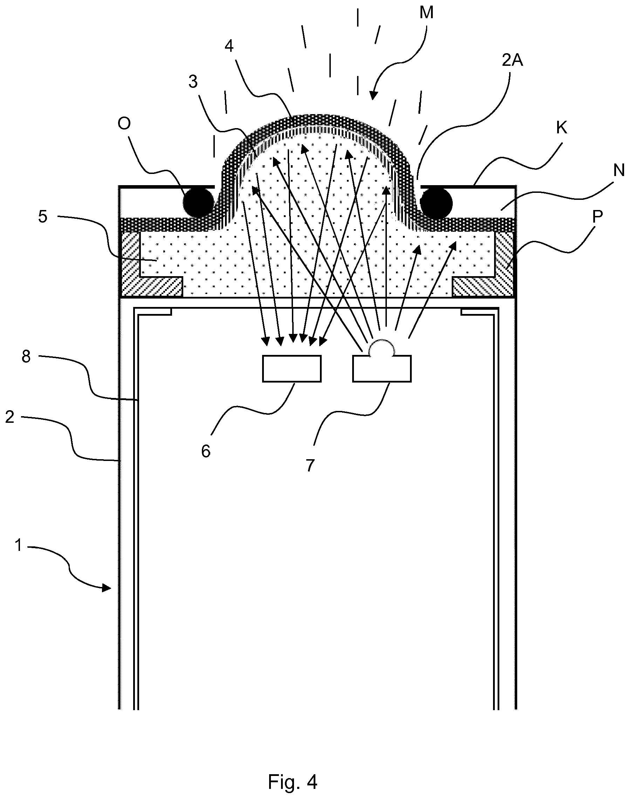

Die vorliegende Erfindung wird im Folgenden anhand der Abbildungen 1 bis 4 erläutert. Die Abbildungen 2-4 zeigen Ausführungsformen der sensorischen Einheit (1). Die vorliegende Erfindung ist jedoch auf die darin illustrierten Ausführungsformen nicht beschränkt.

Abbildung 1 ist eine schematische Darstellung einer nicht unter die Erfindung fallenden sensorischen Einheit (1) in Form einer Sensorkappe mit einem Sensorgehäuse (2), das an der dem Medium (M) zugewandten Seite (2A) eine in das Gehäuseinnere bzw. in das Gehäuselumen ragende Abkantung (K) aufweist. Die Protektorelementmembran (4) ist dem Sensorelement (3) auf dessen medienzugewandter Seite (3A) hohlraumfrei aufgelagert und bedeckt zumindest die Indikatoren-tragende Fläche des Sensorelements (3) auf der Seite (3A). Das Sensorelement (3) liegt mit seiner dem Medium (M) abgewandten Seite (3B) hohlraumfrei dem Trägerelement (5) auf, welches mit der Innenwandung des Gehäuses (2) (lösbar) fest verbunden ist. Trägerelement (5) und Abkantung (K) definieren einen nutförmigen Bereich (N). Die Protektorelementmembran (4) ist mechanisch mit dem Gehäuse (2) verbunden, wobei die bzw. der in den nutförmigen Bereich (N) ragende Peripherie bzw. Randbereich der Membran (4) durch einen in den nutförmigen Bereich (N) eingelegten O-Ring (O) an die dem Medium zugewandte Seite des Trägerelements (5) angedrückt oder gepresst ist. Zwischen Protektorelementmembran (4) und Trägerelement (5) ist das Sensorelement (3) in Form einer Membran angeordnet. Protektorelementmembran (4) und Sensorelementmembran (3) weisen den gleichen Durchmesser auf, weshalb auch der Randbereich der Sensorelementmembran (3) von der mechanischen Verbindung umfasst ist und ebenfalls durch den in den nutförmigen Bereich (N) eingelegten O-Ring (O) an die dem Medium zugewandte Seite des Trägerelements (5) angedrückt oder gepresst ist.

Abbildung 2 ist eine schematische Darstellung der erfindungsgemäßen sensorischen Einheit (1) in Form einer Sensorkappe mit einem Sensorgehäuse (2), das an der dem Medium (M) zugewandten Seite (2A) eine in das Gehäuseinnere bzw. in das Gehäuselumen ragende Abkantung (K) aufweist. Im Gehäuseinneren ist ein Pressring (P) derart angeordnet, dass dessen medienseitige Stirnseite der Abkantung (K) gegenüberliegt und mit dieser einen nutförmigen Bereich (N) bildet. In den nutförmigen Bereich (N) ragt die Peripherie bzw. der Randbereich der Protektorelementmembran (4), wobei die Peripherie bzw. der Randbereich der Membran (4) die medienseitige Stirnseite des Pressrings (P) soweit bedeckt, dass das Lumen bzw. die durch den Innendurchmesser des Pressrings (P) definierte Fläche von der Membran (4) überspannt ist. Die Membran (4) ist dem Sensorelement (3) auf dessen medienzugewandter Seite (3A) hohlraumfrei aufgelagert und bedeckt zumindest die Indikatoren-tragende Fläche des Sensorelements (3) auf der Seite (3A). Das Sensorelement (3) liegt mit seiner dem Medium (M) abgewandten Seite (3B) hohlraumfrei dem Trägerelement (5) auf, welches in das Lumen des Pressrings (P) integriert ist. Die Protektorelementmembran (4) ist mechanisch mit dem Gehäuse (2) verbunden, wobei die bzw. der in den nutförmigen Bereich (N) ragende Peripherie bzw. Randbereich der Membran (4) durch einen in den nutförmigen Bereich (N) eingelegten O-Ring (O) an die medienseitige Stirnseite des Pressrings (P) angedrückt oder gepresst ist.

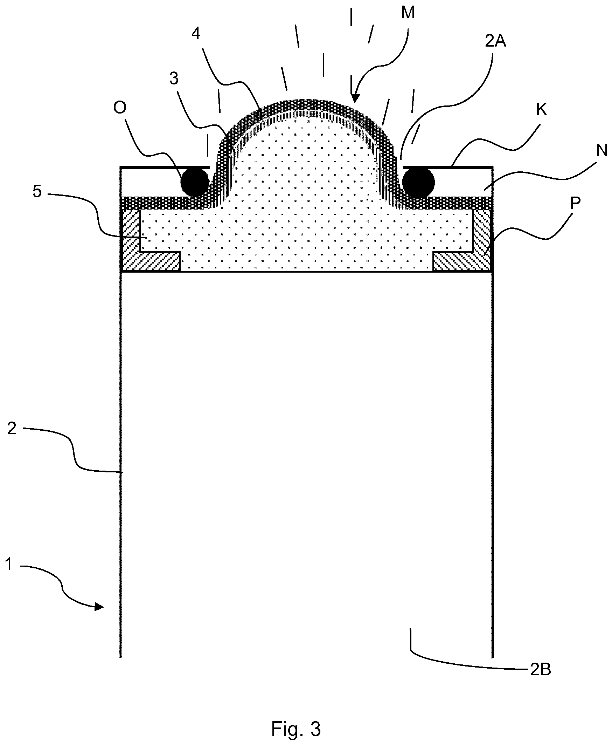

Abbildung 3 zeigt eine schematische Darstellung der erfindungsgemäßen sensorischen Einheit (1) in Form einer Sensorkappe, deren Elemente identisch zu dem in Abbildung 2 gezeigten Aufbau angeordnet sind. Im Unterschied zu Abbildung 2 ist das Trägerelement (5) in der Abbildung 3 plankonvex geformt, wobei die dem Medium (M) zugewandte Seite des Elements (5) konvex bzw. linsenförmig nach aussen, d.h. in Richtung des Mediums (M) ausgeformt ist, so dass das Sensorelement (3) und die Protektorelementmembran (4) der linsenartigen Ausformung hohlraumfrei aufliegen.

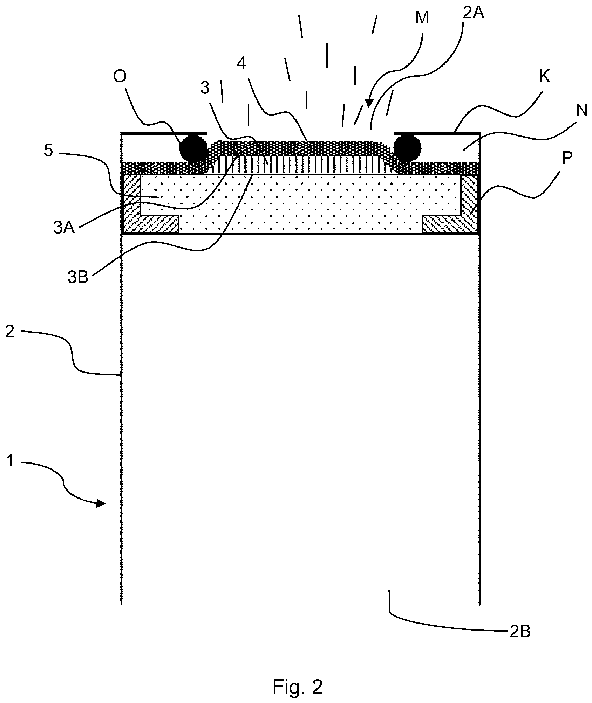

Abbildung 4 zeigt eine schematische Darstellung eines Sensorbereichs mit einer wie in Abbildung 3 dargestellten erfindungsgemäßen sensorischen Einheit (1). Der ausschnittsweise gezeigte Sensor (8) weist eine transparente Stirnseite auf, an der die sensorische Einheit (1) angeordnet, z.B. aufgesteckt ist. Der Sensor (8) weist weiterhin in seinem Inneren eine an seiner Stirnseite angeordnete Detektionseinheit (6) (z.B. ein Photodetektor oder eine Photodiode) und eine Energiequelle (7) zur Emission von Anregungslicht (z.B. eine Leuchtdiode) auf. Die Stirnseite des Sensors (8) und die plane Seite des plankonvex geformten Trägerelements (5) sind zueinander ausgerichtet und können in direktem Kontakt stehen, d.h. der Bereich dazwischen ist hohlraumfrei. Die Pfeile in Richtung des Sensorelements (3) markieren den Strahlungsverlauf des Anregungslichts, die Pfeile in Richtung der Detektionseinheit (6) markieren den Strahlungsverlauf des Emissionslichts der Indikatoren.

## Patentansprüche

1. Sensorische Einheit (1) zur Verbindung mit einem Sensorgehäuse (8), umfassend
a) ein Gehäuse (2) mit einer kappen-, rohr- oder hülsenartigen Ausbildung und mit einer ersten Gehäuseöffnung (2A), welche zu einem zu analysierenden Medium (M) hin ausrichtbar ist und einer zweiten Gehäuseöffnung (2B),
b) wenigstens ein im Gehäuse (2) angeordnetes Sensorelement (3) umfassend Indikatoren und optional Indikatorprotektoren, wobei das Sensorelement (3) eine erste, der ersten Gehäuseöffnung (2A) zugewandte Seite (3A) und eine zweite, der ersten Gehäuseöffnung (2A) gegenüberliegende Seite (3B) aufweist,
c) wenigstens ein Protektorelement (4), das als Protektorelementmembran ausgestaltet ist,
d) ein Trägerelement (5), auf dem oder an dem das Sensorelement (3) angeordnet ist, wobei die zweite Seite (3B) des Sensorelements (3) das Trägerelement (5) kontaktiert oder das Sensorelement (3) mit dem Trägerelement (5) eine Einheit bildet,
worin das Protektorelement (4) im Bereich der ersten Gehäuseöffnung (2A) zwischen dem mindestens einen Sensorelement (3) und dem die sensorische Einheit (1) umgebenden Medium (M), insbesondere im Bereich der Gehäuseöffnung (2A), derart angeordnet ist, dass das Sensorelement (3) das Medium (M) nicht unmittelbar kontaktiert, wobei das Protektorelement (4) im Bereich der ersten Gehäuseöffnung (2A) mechanisch mit dem Gehäuse (2) und dem Sensorelement (3) oder mit der Einheit aus Sensorelement (3) und Trägerelement (5) an einer im Bereich der ersten Gehäuseöffnung (2A) angeordneten, zum Gehäuseinneren ausgerichteten Abkantung (K) des Gehäuses (2) lösbar fest verbunden ist, wobei ein Umgreifen oder Überdecken eines peripheren Bereiches des Protektorelements (4) durch die Abkantung (K) vorgesehen ist, und worin die Peripherie des Protektorelements (4) in einem an der ersten Gehäuseöffnung (2A) angeordneten, durch die Abkantung (K) einerseits und das Trägerelement (5) oder die Einheit aus Sensorelement (3) und Trägerelement (5) andererseits definierten nutförmigen Bereich (N) angeordnet ist, und in einen solchen Bereich (N) gedrückt oder gepresst ist, und der nutförmige Bereich (N) durch die Gehäuseabkantung (K) und einen der Gehäuseabkantung (K) zugeordneten, im Gehäuseinneren angeordneten Pressring (P) definiert ist und das Trägerelement (5) oder die Einheit aus Sensorelement (3) und Trägerelement (5) in ein Lumen des Pressrings (P) integriert ist, worin ein die mechanische Verbindung durch Drücken oder Pressen bewirkendes in den nutförmigen Bereich (N) einlegbares Dicht- und/oder Klemmelement, insbesondere ein O-Ring (O) vorgesehen ist.

2. Sensorische Einheit (1) nach Anspruch 1,
**dadurch gekennzeichnet, dass**
das Sensorelement (3) ein optisches Sensorelement ist und die Indikatoren ausgewählt sind aus gleich- oder verschiedenartigen Lumineszenz-aktiven Mitteln (Lumineszenzindikatoren) und das Sensorelement (3) und das Trägerelement (5) oder die aus Sensorelement (3) und Trägerelement (5) gebildete Einheit für Emissionslicht und/oder Anregungslicht der Lumineszenzindikatoren transparent ist.

3. Sensorische Einheit (1) nach einem der vorhergehenden Ansprüche,
**dadurch gekennzeichnet, dass**
das Protektorelement (4) an dem Sensorelement (3) derart angeordnet ist, dass das Protektorelement (4) das Sensorelement (3) an dessen erster Seite (3A) unmittelbar, kontaktiert oder vollflächig unmittelbar kontaktiert oder hohlraumfrei kontaktiert.

4. Sensorische Einheit (1) nach einem der vorhergehenden Ansprüche,
**dadurch gekennzeichnet, dass**
die mechanische Verbindung des Protektorelements (4) im Bereich der ersten Gehäuseöffnung (2A) mit dem Gehäuse (2) und dem Sensorelement (3) und/oder dem Trägerelement (5) oder mit dem Gehäuse (2) und der Einheit aus Sensorelement (3) und Trägerelement (5) gasdicht ist.

5. Sensorische Einheit (1) nach Anspruch 4,
**dadurch gekennzeichnet, dass**
der periphere Bereich des Protektorelements (4) die der ersten Gehäuseöffnung (2A) zugewandte Stirnfläche des Pressrings (P) wenigstens soweit bedeckt, dass ein Innendurchmesser des Pressrings (P) vollständig von dem Protektorelement (4) überspannt ist.

6. Sensorische Einheit (1) nach einem der vorhergehenden Ansprüche,
**dadurch gekennzeichnet, dass**
das Sensorelement (3) mit dem Trägerelement (5) und optional mit dem Pressring (P) eine Einheit bildet und das Gehäuse (2) und die Einheit aus Sensorelement (3) und Trägerelement (5) und optional Pressring (P) als einstückiger Körper ausgebildet sind.

7. Sensorische Einheit (1) nach einem der vorhergehenden Ansprüche,
**dadurch gekennzeichnet, dass**
die zur ersten Gehäuseöffnung (2A) zugewandte Seite des Trägerelements (5) oder der Einheit aus Sensorelement (3) und Trägerelement (5) konvex geformt ist und das Trägerelement oder die Einheit aus Sensorelement (3) und Trägerelement (5) ein plan-konvex geformter Körper ist.

8. Sensorische Einheit (1) nach einem der vorhergehenden Ansprüche,
**dadurch gekennzeichnet, dass**
der Durchmesser des Protektorelements (4) gleich dem Außendurchmesser des O-Ringes (0) oder größer als dieser ist und/oder der Durchmesser des Sensorelements (3) kleiner als der Innendurchmesser des O-Ringes (O) ist.

9. Sensorische Einheit (1) nach einem der vorhergehenden Ansprüche,
**dadurch gekennzeichnet, dass**
das Protektorelement (4) permeabel für Sauerstoff ist und eine Gaspermeabilität von mindestens 5 x 10⁻⁹ cm² s⁻¹ mmHg⁻¹ bzw. 3.750.10⁻¹⁵ m⁴ s⁻¹ N⁻¹ für Sauerstoff aufweist und optional impermeabel für nicht-gasförmige Verbindungen ist.

10. Sensorische Einheit (1) nach einem der vorhergehenden Ansprüche,
**dadurch gekennzeichnet, dass**
die Indikatoren ausgewählt sind aus Ruthenium-, Rhenium-, Rhodium-, Iridium- Lanthanidkomplexen, metallierten Porphyrinen, unmetallierten Porphyrinen oder Mischungen daraus, optional in Kombination mit fluorierten Farbstoffen und/oder Lichtschutzmitteln.

11. Sensor umfassend mindestens eine sensorische Einheit (1) wie in einem der vorhergehenden Ansprüche definiert.

12. Verwendung eines Sensors wie in Anspruch 11 definiert oder einer sensorischen Einheit (1) wie in einem der Ansprüche 1-10 definiert zur quantitativen und/oder qualitativen Bestimmung wenigstens eines Analyten in einem Medium (M), insbesondere zum Nachweis von molekularem Sauerstoff in einem gasförmigen oder flüssigen Medium und/oder zur Bestimmung des molekularen Sauerstoffgehaltes eines gasförmigen oder flüssigen Mediums, wobei das Medium (M) optional Verbindungen enthält, welche auf die Indikatoren inaktivierend und/oder zerstörend, insbesondere oxidierend wirken, wie zum Beispiel Chlor, Ozon, Hydroxylradikale, Peroxidradikale und/oder Superoxide.

## Claims

1. Sensory unit (1) for connection to a sensor housing (8), comprising
a) a housing (2) with a cap-, tube- or sleeve-like design and with a first housing opening (2A), which can be directed to a medium (M) to be analyzed and a second housing opening (2B),
b) at least one sensor element (3) arranged in the housing (2) comprising indicators and optionally indicator protectors, wherein the sensor element (3) has a first side (3A) facing the first housing opening (2A) and a second side (3B) opposite the first housing opening (2A),
c) at least one protector element (4) which is designed as a protector element membrane,
d) a carrier element (5) on which or at which the sensor element (3) is arranged, with the second side (3B) of the sensor element (3) contacting the carrier element (5), or the sensor element (3) forming a unit with the carrier element (5),
wherein the protector element (4) is arranged in the region of the first housing opening (2A) between the at least one sensor element (3) and the medium (M) surrounding the sensor unit (1) in such a way that the sensor element (3) does not directly contact the medium (M), wherein the protector element (4) in the region of the first housing opening (2A) is connected mechanically fixedly to the housing (2) and the sensor element (3) or detachably to the unit comprising sensor element (3) and carrier element (5) at a chamfer (K) of the housing (2), which chamfer (K) is arranged in the region of the first housing opening (2A) and is oriented towards the interior of the housing,
wherein a gripping or covering of a peripheral region of the protector element (4) by the chamfer (K) is provided, and wherein the periphery of the protector element (4) is arranged in a groove-shaped region (N) arranged at the first housing opening (2A) and defined by the chamfer (K) on the one hand and the support element (5) or the unit of sensor element (3) and support element (5) on the other hand, and is pressed or pressed into such a region (N), and the groove-shaped region (N) is defined by the housing chamfer (K) and a press ring (P) which is assigned to the housing chamfer (K) and is arranged in the housing interior, and the carrier element (5) or the unit comprising sensor element (3) and carrier element (5) is integrated into a lumen of the press ring (P), wherein a sealing and/or clamping element, in particular an O-ring (O), which effects the mechanical connection by pressing or pressing and can be inserted into the groove-shaped region (N) is provided.

2. Sensory unit (1) according to claim 1, **characterized in that** the sensor element (3) is an optical sensor element and the indicators are selected from luminescence-active means of the same or different types (luminescence indicators) and the sensor element (3) and the carrier element (5) or the unit formed from sensor element (3) and carrier element (5) is transparent to emission light and/or excitation light of the luminescence indicators.

3. Sensory unit (1) according to one of the preceding claims, **characterized in that** the protector element (4) is arranged on the sensor element (3) in such a way that the protector element (4) or contacts the sensor element (3) on its first side (3A) directly or over the entire surface or contacts it without cavities.

4. Sensory unit (1) according to one of the preceding claims, **characterized in that** the mechanical connection of the protector element (4) in the region of the first housing opening (2A) with the housing (2) and the sensor element (3) and/or the carrier element (5) or with the housing (2) and the unit of sensor element (3) and carrier element (5) is gas-tight.

5. Sensory unit (1) according to claim 4, **characterized in that** the peripheral region of the protector element (4) covers the end face of the press ring (P) facing the first housing opening (2A), in particular at least to such an extent that an inner diameter of the press ring (P) is completely spanned by the protector element (4).

6. Sensory unit (1) according to one of the preceding claims, **characterized in that** the sensor element (3) forms a unit with the carrier element (5) and optionally with the press ring (P), and the housing (2) and the unit comprising sensor element (3) and carrier element (5) and optionally press ring (P) are formed as a one-piece body.

7. Sensory unit (1) according to one of the preceding claims, **characterized in that** the side of the carrier element (5) or the unit of sensor element (3) and carrier element (5) facing the first housing opening (2A) is convexly shaped and the carrier element or the unit of sensor element (3) and carrier element (5) is a plano-convexly shaped body.

8. Sensory unit (1) according to any of the preceding claims, **characterized in that** the diameter of the protector element (4) is equal to or larger than the outer diameter of the O-ring (O) and/or the diameter of the sensor element (3) is smaller than the inner diameter of the O-ring (O).

9. Sensory unit (1) according to any of the preceding claims, **characterized in that** the protector element (4) is permeable to oxygen and has a gas permeability of at least 5 x 10-9 cm2 s-1 mmHg-1 or 3,750 10-15 m4 s-1 N-1 for oxygen, and is optionally impermeable to non-gaseous compounds.

10. Sensory unit (1) according to any of the preceding claims, **characterized in that** the indicators are selected from ruthenium, rhenium, rhodium, iridium lanthanide complexes, metallized porphyrins, unmetallized porphyrins or mixtures thereof, optionally in combination with fluorinated dyes and/or light stabilizers.

11. Sensor comprising at least one sensory unit (1) as defined in any of the preceding claims.

12. Use of a sensor as defined in claim 11 or a sensory unit (1) as defined in one of claims 1-10 for the quantitative and/or qualitative determination of at least one analyte in a medium (M), in particular for the detection of molecular oxygen in a gaseous or liquid medium and/or for the determination of the molecular oxygen content of a gaseous or liquid medium, wherein the medium (M) optionally contains compounds which have an inactivating and/or destructive, in particular oxidizing effect on the indicators, such as for example chlorine, ozone, hydroxyl radicals, peroxide radicals and/or superoxides.

## Revendications

1. Unité sensorielle (1) pour la connexion à un boîtier de capteur (8), comprenant
a) un boîtier (2) de type capuchon, tube ou manchon, avec une première ouverture de boîtier (2A), qui peut être dirigée vers un milieu (M) à analyser, et une deuxième ouverture de boîtier (2B),
b) au moins un élément capteur (3) disposé dans le boîtier (2) comprenant des indicateurs et éventuellement des protections d'indicateurs, l'élément capteur (3) présentant un premier côté (3A) tourné vers la première ouverture de boîtier (2A) et un deuxième côté (3B) opposé à la première ouverture de boîtier (2A),
c) au moins un élément protecteur (4) qui est conçu comme une membrane d'élément protecteur,
d) un élément support (5) sur lequel ou sur lequel est disposé l'élément capteur (3), la deuxième face (3B) de l'élément capteur (3) étant en contact avec l'élément support (5), ou l'élément capteur (3) formant une unité avec l'élément support (5), l'élément de protection (4) étant disposé dans la zone de la première ouverture de boîtier (2A) entre le au moins un élément capteur (3) et le milieu (M) entourant l'unité de capteur (1) de telle sorte que l'élément capteur (3) ne soit pas en contact direct avec le milieu (M), dans lequel l'élément de protection (4) est relié, dans la zone de la première ouverture (2A) du boîtier, de manière mécaniquement fixe au boîtier (2) et à l'élément capteur (3) ou de manière amovible à l'unité composée de l'élément capteur (3) et de l'élément porteur (5) au niveau d'un chanfrein (K) du boîtier (2), lequel chanfrein (K) est disposé dans la zone de la première ouverture (2A) du boîtier et est orienté vers l'intérieur du boîtier, dans lequel il est prévu de saisir ou de recouvrir une zone périphérique de l'élément de protection (4) par le chanfrein (K), et dans lequel la périphérie de l'élément de protection (4) est disposée dans une zone (N) en forme de rainure disposée au niveau de la première ouverture de boîtier (2A) et définie par le chanfrein (K) d'une part et l'élément d'appui (5) ou l'unité composée de l'élément capteur (3) et de l'élément d'appui (5) d'autre part, et est enfoncée ou pressée dans une telle zone (N), et la zone en forme de rainure (N) est définie par le chanfrein (K) du boîtier (2) et une bague de pression (P) associée au chanfrein du boîtier (2) et disposée à l'intérieur du boîtier (2), et l'élément de support (5) ou l'unité comprenant l'élément capteur (3) et l'élément de support (5) est intégré(e) dans une lumière de la bague de pression (P), dans lequel il est prévu un élément d'étanchéité et/ou de serrage, en particulier un joint torique (O), qui réalise la liaison mécanique par pression ou emboutissage et peut être inséré dans la zone en forme de rainure (N).

2. Unité sensorielle (1) selon la revendication 1, **caractérisée en ce que** l'élément de détection (3) est un élément de détection optique et les indicateurs sont choisis parmi des moyens actifs de luminescence de même type ou de types différents (indicateurs de luminescence) et l'élément de détection (3) et l'élément porteur (5) ou l'unité formée de l'élément de détection (3) et de l'élément porteur (5) est transparente à la lumière d'émission et/ou à la lumière d'excitation des indicateurs de luminescence.

3. Unité sensorielle (1) selon l'une des revendications précédentes, **caractérisée en ce que** l'élément protecteur (4) est disposé sur l'élément capteur (3) de telle manière que l'élément protecteur (4) ou entre en contact avec l'élément capteur (3) sur son premier côté (3A) directement ou sur toute la surface ou entre en contact avec lui sans cavités.

4. Unité sensorielle (1) selon l'une des revendications précédentes, **caractérisée en ce que** la liaison mécanique de l'élément de protection (4) dans la zone de la première ouverture de boîtier (2A) avec le boîtier (2) et l'élément de détection (3) et/ou l'élément porteur (5) ou avec le boîtier (2) et l'unité composée de l'élément de détection (3) et de l'élément porteur (5) est étanche au gaz.

5. Unité sensorielle (1) selon la revendication 4, **caractérisée en ce que** la zone périphérique de l'élément de protection (4) recouvre la face frontale de la bague de pression (P) tournée vers la première ouverture (2A) du boîtier, en particulier au moins dans une mesure telle qu'un diamètre intérieur de la bague de pression (P) est entièrement recouvert par l'élément de protection (4).

6. Unité sensorielle (1) selon l'une des revendications précédentes, **caractérisée en ce que** l'élément de détection (3) forme une unité avec l'élément de support (5) et éventuellement avec la bague de pression (P), et le boîtier (2) et l'unité comprenant l'élément de détection (3) et l'élément de support (5) et éventuellement la bague de pression (P) sont formés comme un corps d'une seule pièce.

7. Unité sensorielle (1) selon l'une des revendications précédentes, **caractérisée en ce que** le côté de l'élément porteur (5) ou de l'unité composée de l'élément capteur (3) et de l'élément porteur (5), qui est tourné vers la première ouverture de boîtier (2A), est de forme convexe et l'élément porteur ou l'unité composée de l'élément capteur (3) et de l'élément porteur (5) est un corps de forme piano-convexe.

8. Unité sensorielle (1) selon l'une des revendications précédentes, **caractérisée en ce que** le diamètre de l'élément protecteur (4) est égal ou supérieur au diamètre extérieur du joint torique (O) et/ou le diamètre de l'élément capteur (3) est inférieur au diamètre intérieur du joint torique (O).

9. Unité sensorielle (1) selon l'une des revendications précédentes, **caractérisée en ce que** l'élément protecteur (4) est perméable à l'oxygène et présente une perméabilité aux gaz d'au moins 5 x 10-9 cm2 s-1 mmHg-1 ou 3.750 10-15 m4 s-1 N-1 pour l'oxygène, et est éventuellement imperméable aux composés non gazeux.

10. Unité sensorielle (1) selon l'une des revendications précédentes, **caractérisée en ce que** les indicateurs sont choisis parmi les complexes de lanthanides de ruthénium, rhénium, rhodium, iridium, les porphyrines métallisées, les porphyrines non-métallisées ou leurs mélanges, éventuellement en combinaison avec des colorants fluorés et/ou des stabilisants à la lumière.

11. Capteur comprenant au moins une unité sensorielle (1) telle que définie dans l'une des revendications précédentes.

12. Utilisation d'un capteur selon la revendication 11 ou d'une unité sensorielle (1) selon l'une des revendications 1 à 10 pour la détermination quantitative et/ou qualitative d'au moins un analyte dans un milieu (M), en particulier pour la détection de l'oxygène moléculaire dans un milieu gazeux ou liquide et/ou pour la détermination de la teneur en oxygène moléculaire d'un milieu gazeux ou liquide, **caractérisée en ce que** le milieu (M) contient éventuellement des composés qui ont un effet inactivant et/ou destructeur, en particulier oxydant, sur les indicateurs, comme par exemple le chlore, l'ozone, les radicaux hydroxyle, les radicaux peroxyde et/ou les superoxydes.
